# EUROPEAN PATENT SPECIFICATION

(11) **EP 1 562 063 B1**
(45) Date of publication and mention of the grant of the patent: **20.12.2006**
(21) Application number: 05100800.1
(22) Date of filing: 04.02.2005
(51) Int. Cl.: G02B 23/12, B60R 1/00

(54) **Night Vision System**
Nachtsichtsystem
Système de vision de nuit

(30) Priority: 04.02.2004 US 708037
(43) Date of publication of application: 10.08.2005
(73) Proprietor: Ford Global Technologies, LLC., Dearborn, MI 48126 (US)
(72) Inventor: Shaffer, Aric, David, Ypsilanti, MI Michigan 48197 (US)
(74) Representative: Messulam, Alec Moses

(56) References cited:
- EP-A- 1 392 054
- DE-A1- 10 033 103
- US-A- 5 923 243
- US-A1- 2001 050 340
- ANONYMOUS: "Anti-blinding scheme for near-infrared diode-laser-based active night-vison" RESEARCH DISCLOSURE, KENNETH MASON PUBLICATIONS, HAMPSHIRE, GB, vol. 440, no. 103, December 2000 (2000-12), XP007127288 ISSN: 0374-4353

## Description

### Field of the invention

The present invention relates to a night vision system for detecting objects at relatively low visible light levels.

### Background of the invention

Night vision systems are used in vehicles to allow a driver to see objects at relatively low visibility light levels. Night vision systems are typically classified as either passive night vision systems or active night vision systems. In known passive night vision systems used in automotive applications, mid-infrared cameras are used to image objects using the ambient infrared light emitted by the objects in the environment.

Known active night vision systems utilize a near-infrared (NIR) laser diode or a filtered incandescent light source to generate NIR light. The NIR light is subsequently reflected off objects in the environment and is received by a NIR-sensitive camera. The camera generates a video signal responsive to received light.

A problem encountered by night vision systems is blinding, which can occur if two vehicles equipped with night vision systems approach each other. The term blinding is used herein to refer to the sensor in a vehicle being driven beyond the signal saturation point by the light from an oncoming vehicle.

One solution to night vision system blinding by oncoming vehicles similarly equipped with a NIR light source is provided in US-A- 2003/0155514 corresponding to U.S. Patent Application Serial No. 09/683,840 entitled "GPS-Based Anti-Blinding System For Active Night Vision." In that application, a global positioning system is used to determine the direction of travel of the vehicles as well as an absolute time reference. Vehicles proximate one another synchronize their pulsed light sources to the absolute time reference signal with the phase of the light pulse based on the direction of motion of the respective vehicles. In this way, two cars approaching one another from opposite directions will have their NIR light sources pulsed out-of-phase with each other at duty cycles below 50% to avoid having their light source "on" when the opposing vehicle's camera is also "on." The disclosed anti-blinding scheme, however, requires that all night vision equipped vehicles must also be equipped with GPS systems. Another system in which proximate vehicles communicate with one another in order to similarly alter their relative phase relation of their NIR light sources is provided by EP-A-1 392 054.

### Object of the invention

The invention seeks to provide an alternative night vision system that mitigates or eliminates blinding of the vehicle's night vision system by similarly equipped oncoming vehicles.

### Summary of the Invention

According to the present invention, there is a night vision system for a motor vehicle according to claim 1 comprising a primary infrared source for emitting primary pulses of infrared radiation to illuminate the road ahead, a camera for receiving radiation reflected from objects in the road, a display connected to the camera for displaying an image of the road, a communication link for communicating with similar night vision systems fitted to other vehicles to enable exchange of data between the systems regarding the timing of the primary pulses emitted by the systems, and a controller connected to the communication link and operative to set the phase of the pulses emitted by the primary infrared source in such a manner as to avoid blinding of the night vision systems of oncoming vehicles, characterised by a compass for determining the direction of travel of the vehicle and wherein the controller is prevented from altering the phase of the primary infrared source in response primary radiation pulses when the compass bearing of the vehicle lies within a predetermined range.

In its simplest form, the communication link between vehicles approaching in opposite directions may utilise the timing data derivable directly from the primary pulses emitted by the night vision system of the oncoming vehicle.

Hence, in a preferred embodiment of the invention, the communication link is established by providing means to sense pulses of infrared radiation emitted by an oncoming similarly equipped vehicle at times when the road is not illuminated by the primary source of the night vision system, and the controller is operative to change the phase of the primary source in order to minimise coincidence between radiation pulses emitted by the primary source and the pulses sensed to have been emitted by the oncoming vehicle.

The means for sensing pulses of infrared radiation at times when the road is not illuminated by the primary infrared source may either comprise processing means connected to the camera or a radiation sensor separate from the camera.

In a further embodiment of the invention, the communication link comprises a secondary source for emitting from the rear of the vehicle secondary radiation pulses that are physically distinguishable from the radiation pulses emitted by the primary infrared source, and means for sensing secondary radiation emitted by a similarly equipped vehicle which is being followed, the controller being operative in response to sensing of secondary radiation to change the phase of the primary infrared source in order to achieve full coincidence between the primary source of the vehicle and the secondary pulses received from the vehicle ahead.

The invention will now be described further, by way of example, with reference to the accompanying drawings, in which :
Figure 1 is a schematic block diagram of a night vision system in accordance with the present invention; and
Figure 2 is a graph illustrating the timing of the night vision signals for two vehicles travelling in opposite directions.

### Detailed Description Of The Preferred Embodiments

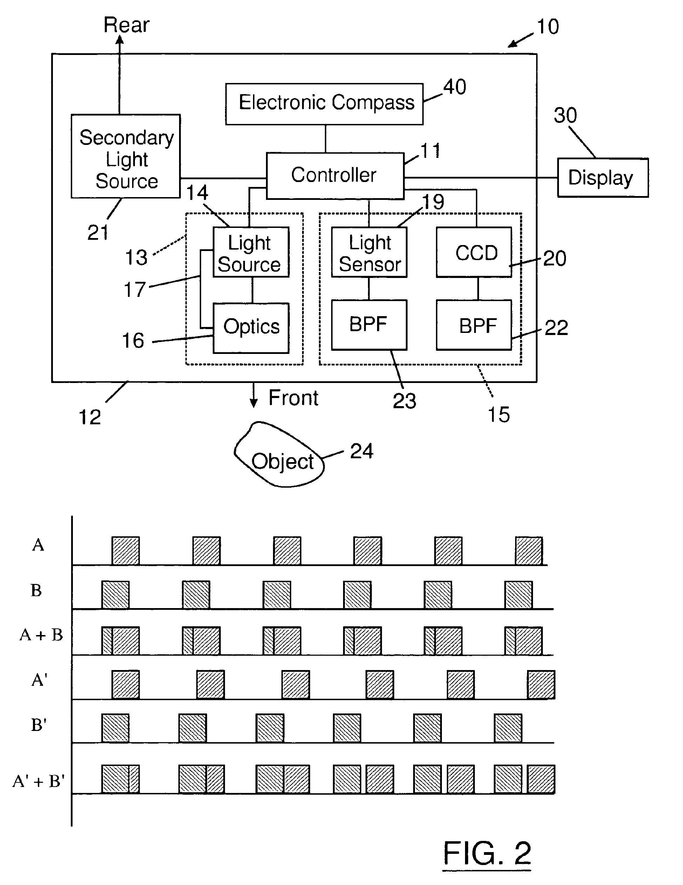

Figure 1 illustrates a night vision system 10 for detecting objects at relatively low visibility light levels. The system 10 is primarily though not exclusively intended for use in an automotive vehicle to allow a driver to see objects at night that would not otherwise be visible to the naked eye.

The system 10 includes a housing 12 containing a controller 11, an illumination subsystem 13, a receiver 15 and, a secondary light source 21. While several of the system components may be included within the housing 12, it should be understood, that the components of system 10 could alternatively be disposed at different locations within the vehicle, whereupon the housing 12 may not even be needed. As will be discussed in more detail below, the system 10 may be used to detect any reflective object, such as object 24, in proximity to the system 10.

The controller 11 is preferably a microprocessor-based controller including drive electronics for the illumination subsystem 13, receiver 15, and image processing logic for a display system 30. The controller 11 also includes drive electronics for the secondary light source 21. The display system 30 may alternatively include its own control logic for generating and rendering image data.

The illumination subsystem 13 includes a NIR light source 14, beam-forming optics 16, and a coupler 17 between the two. Many light source and optics arrangements may be used in implementing the present invention. For example, the light source 14 may be a NIR diode laser, the beam forming optics 16 may comprise a thin-sheet optical element followed by a holographic diffuser, the combined purpose of which is to form a beam pattern in the direction of the Front arrow comparable to the high-beam pattern used for normal vehicle headlamps; and the coupler 17 between the light source 14 and optics 16 can be a fibre-optic cable.

The illumination subsystem 13 transmits primary pulses of light to illuminate the road ahead of the vehicle without blinding drivers in approaching vehicles, since the NIR light is not visible to the human eye. The light source 14 may comprise a NIR diode laser or light-emitting diode, or any other NIR source that can be switched on and off at frequencies at or exceeding typical video frame rates (30-60 Hz). For example, the light source 14 may include a single stripe diode laser, model number S-81-3000-C-200-H manufactured by Coherent, Inc. of Santa Clara, California. Further, the coupler may be a cable, or the light source could be directly coupled to the optical element 16 through a rigid connector, in which case the coupler would be a simple lens or reflective component. The coupler 17, depending upon the spread characteristics of the light source 14 may be omitted altogether.

Although the system 10 preferably uses a NIR laser light source, an alternative embodiment of system 10 may utilise a conventional light emitting diode infrared source, or any other type of infrared light source, as long as it is capable of pulsed operation, in lieu of the infrared diode laser.

The secondary light source 21 is used as a trigger pulse light source to transmit secondary pulses from the rear of the vehicle for reception by following vehicles. Secondary light source 21 can include any type of pulsed light source but preferably is an infrared light source operating at a different wavelength from the primary light source 14. As will be described below, the secondary light pulses are used by a following similarly equipped vehicle to synchronize the gating of its own primary light source and receiver 15 to ensure that all vehicles travelling in the same direction emit primary pulses at the same time as one another. This then enables vehicles travelling in opposite directions to time their primary pulses to occur during the intervals between the primary pulses of oncoming traffic. In this way, the night vision systems of vehicle travelling towards one another operate in separate time slots and do not interfere with one another.

The secondary signals from the source 21 of another vehicle need to be physically distinguishable from reflections of the primary pulses of the system, a convenient way of achieving this aim being for the wavelength of the light to be different.

The receiver 15 includes a NIR-sensitive camera 20 and optical band pass filter 22. The NIR-sensitive camera 20 provides a video signal responsive to reflected infrared light received by the camera 20. The camera 20 may comprise a CCD camera or a CMOS camera. In one embodiment of the system 10, the CCD camera is camera model number STC-H720 manufactured by Sentech Sensor Technologies America, Inc. Infrared light emitted from the illumination subsystem 13 and reflected off the object 24 in the environment is received by the NIR-sensitive camera 20. The video signal is transmitted to the controller 11 or directly to the display module 30 where it is processed and displayed to allow the vehicle operator to see the object 24. The display 30 may be a television monitor, a CRT, LCD, or the like, or a head-up-display positioned within the automotive vehicle to allow the user to see objects illuminated by the system 10.

To avoid blinding, the light used to generate the displayed image is only the light received in synchronism with the transmitted primary pulses. Any light received outside these time slots cannot have originated from the vehicle's own night vision system and if coming from a vehicle travelling in the opposite direction is likely to cause blinding of the camera.

The optical band pass filter 22 is provided to filter the infrared light reflected from the object 24. In particular, the filter 22 only allows light within the NIR light spectrum to be received by the camera 20. An advantage of using the filter 22 is that the filter 22 prevents saturation of the pixel elements (i.e., blooming) in the camera 20 by visible light emitted from the headlamps of other automotive vehicles. The filter 22 is preferably disposed proximate to a receiving lens in the camera 20.

The light sensor 19 includes a photodiode or photocell or similar light sensor mounted in the receiver module 15 and filtered, such as by band pass filter 23, to be sensitive only to light at the wavelength corresponding to the secondary light source 21. Thus, the light sensor 19 detects only trigger pulses rather than the primary light source.

The controller 11 also receives a signal from an electronic compass 40 and includes a highly accurate source of clock signals. The clock signals can for example be received by radio from an atomic clock or be generated within the controller by a stable oscillator synchronised with an atomic clock.

The invention does not require the secondary light source 21, nor a source of accurate clock pulses. Instead the system of the invention relies on enabling vehicles to communicate with one another so that vehicles are aware not only of the timing of their own primary pulses but of those emitted by nearby vehicles. This allows the controller of each vehicle to select a time slot that avoids any of the night vision system being blinded.

In its simplest form, the communication link between vehicles approaching in opposite directions uses the timing data derivable directly from the primary pulses emitted by the night vision system of the oncoming vehicle. The system is designed, as will be explained further below, to recognise when the receiver 15 is being blinded by primary pulses from an oncoming vehicle and to take action to prevent such blinding by shifting its primary pulses into different time slots until interference between the two night vision systems is avoided.

This principle of operation will be better understood by reference to Figure 2 which shows the timing of the primary light pulses A and B of two vehicles travelling in opposite directions, both vehicles being similarly equipped with a night vision system of the invention. In the absence of correcting action being taken, the receiver 15 of each of the system will receive the signal A + B, and because the signals A and B overlap in time, the receivers 15 of both vehicles will be blinded during times when both vehicles are transmitting primary signal simultaneously.

If the controller of the first vehicle now compares the pulses A which it transmitted with the pulses A + B that it received, it will sense that light from another vehicle was received before it commenced to transmit. This not only warns the controller of the presence of an oncoming vehicle but also indicates that the time between transmitted pulses A needs to be increased to avoid blinding. Likewise, the controller of the second vehicle will compare the pulses B which it transmitted with the pulses A + B that it received, and will sense that light from another vehicle was received after it ceased transmitting, indicating that the time between the pulses B needs to be reduced to avoid blinding.

The modulation of the frequency of the pulses A and B by the controller 11 will result in the pulses A' and B'. From the pulses A' + B' received by the two receivers, it will be seen that the primary pulses rapidly drift apart until coincidence between the two sets of primary pulses is avoided. The two controllers 11 may either continue to shift the phase of the primary pulses until complete separation has been achieved or until a minimum degree of overlap remains, so long as blinding is eliminated.

The pulses shown in Figure 2 can be produced from the camera 20 by integrating or averaging the intensity of received light. Alternatively, if the image from the camera is sent directly to the display rather than the controller, then a separate light sensor, similar to the light sensor 19 but sensitive to the wavelength of the transmitted light pulses, may be used to produce the pulses used by the controller to synchronise the primary pulses to avoid blinding oncoming traffic.

As so far described, each vehicle will transmit in a random phase until it meets a vehicle coming in the opposite direction, whereupon it will change to another random phase that avoids blinding that vehicle. On meeting a second vehicle coming in the opposite direction, the process will need to be repeated. However a problem can now occur if a vehicle is within sight of two approaching vehicles which are not in synchronism with one another. The system will be unable to take steps to ensure that it avoids being blinded by both vehicles. To avoid this problem, steps are needed to ensure that the primary pulses of all vehicles travelling in the same direction are all in phase with one another.

This is achieved by means of the secondary pulses from the rearward facing source 21. These pulses are received by the sensor 19 and compared by the controller 11 with the primary transmitted pulses. The secondary source 21 and the sensor 19 establish a communication link between vehicles travelling in the same direction and allows the primary pulses to be shifted into phase with one another. The operation is analogous to that described by reference to Figure 2 except that in this case the sense of the feedback is reversed so as to achieve full coincidence instead of full separation of the two trains of pulses.

As there are now two feedback systems in operation, it is possible for them to want to act in opposition to one another. Supposing, for example, that both a vehicle being followed and another coming in the opposite direction are transmitting primary pulses in phase with one another. One feedback system will attempt to move the primary pulses into phase and the other into anti-phase. If synchronisation with the vehicle ahead is given priority, then a situation can arise when two streams of traffic travelling in opposite directions will persist in blinding one another. Conversely, if synchronisation into anti-phase with oncoming traffic is given priority, then the possibility previously described could occur whereby all the vehicles with be transmitting with random phase making avoidance of blinding impossible.

To resolve this conflict, the invention proposes using the electronic compass 40. The compass is used to make one direction of traffic on a road dominant by giving priority to synchronisation with the vehicle in front when the vehicle is driving in selected quadrants of the compass and giving priority to synchronisation into anti-phase with oncoming traffic when travelling in the opposite direction. If the primary pulses of all the vehicles travelling in one direction are kept in phase with one another all those in the opposite direction are kept in exact anti-phase then blinding will not occur in either direction.

When dividing all directions into quadrants, there will be roads that wind their way in and out of a dominant quadrant, if they happen to run generally parallel to the boundary between adjacent quadrants. To avoid frequent alteration of the priority given to the two feedback systems, it is possible to set a large hysterysis band so that a vehicle must move a considerable distance into a new quadrant before the feedback priority is changed.

It is desirable to increase the mark to space ratio of the primary pulses as much as possible to improve image brightness. To optimise brightness it is desirable to provide an accurate time signal for reference by all systems. If the instant of commencement of each second is known precisely and each pulse cycle has a duration of say 20 ms (corresponding to an image refresh rate of 50 Hz) then vehicles can be allowed to transmit only during one of the two windows, namely from 1 ms after the start of each cycle to 10 ms and from 11 ms to 20 ms. This allows for a mark to space ratio approaching 50% while leaving a 1 ms margin between light pulses.

When the primary pulses are synchronised to a time signal which allows only two possible phases, it is possible use the compass reading to choose between the two phases whenever a vehicle turns onto a new road that has no traffic on it. In this way, the likelihood of a blinding is reduced and the system need to interfere with the phase of the primary pulses to avoid blinding arises less frequently. In this case, the feedback control of the phase of the primary pulses can also be simplified as all that is necessary is to select the other permissible phase instead of hunting for a phase in which coincidence between primary pulses is minimised.

It will be appreciated that the analysis of the radiation pulses emitted by other vehicles establishes a communication link between the vehicles which has been used above only for the purpose of avoiding blinding. It is however possible to make further use of such a communication link to allow vehicles to exchange other information. For example, a vehicle may transmit data indication its position coordinates, its speed, its rate of deceleration or even a distress signal. Such data can be used to avoid collision between vehicles or to summon help.

As described above, the data exchanged between vehicles was carried by the timing of the pulses of primary and secondary radiation, but the data could be digitally encoded and transmitted by any suitable method, for example by amplitude or pulse width modulation of the emitted pulses. Thus, while the leading edges of the pulses may continue to indicate the phase of the primary pulses, speed and position information can be transmitted by varying the duration of individual pulses.

## Claims

1. A night vision system for a motor vehicle comprising
a primary infrared source (13) for emitting primary pulses of infrared radiation to illuminate the road ahead,
a camera (20) for receiving radiation reflected from objects in the road,
a display (30) connected to the camera (20) for displaying an image of the road,
a communication link (13,20; 21,19) for communicating with similar night vision systems fitted to other vehicles to enable exchange of data between the systems regarding the timing of the primary pulses emitted by the systems, and
a controller (11) connected to the communication link and operative to set the phase of the pulses emitted by the primary infrared source (13) in such a manner as to avoid blinding of the night vision systems of oncoming vehicles,
**characterised by**
a compass (40) for determining the direction of travel of the vehicle and wherein the controller (11) is prevented from altering the phase of the primary infrared source in response to primary radiation pulses when the compass bearing of the vehicle lies within a predetermined range.

2. A night vision system as claimed in claim 1, wherein the communication link comprises means for sensing pulses of infrared radiation emitted by an oncoming similarly equipped vehicle at times when the road is not illuminated by the primary source (13) of the night vision system, and the controller is operative to change the phase of the primary source (13) in order to minimise coincidence between radiation pulses emitted by the primary source and the pulses sensed to have been emitted by the oncoming vehicle.

3. A system as in claim 2, wherein the means for sensing pulses of infrared radiation at times when the road is not illuminated by the primary infrared source comprises processing means connected to the camera (20).

4. A system as in claim 2, wherein the means for sensing pulses of infrared radiation at times when the road is not illuminated by the primary infrared source comprises a radiation sensor separate from the camera (20).

5. A system as claimed in any preceding claim, wherein the communication link comprises :
a secondary source (21) for emitting from the rear of the vehicle secondary radiation pulses that are physically distinguishable from the radiation pulses emitted by the primary infrared source, and
b) means (19) for sensing secondary radiation emitted by a similarly equipped vehicle which is being followed,
wherein the controller (11) is operative in response to sensing of secondary radiation to change the phase of the primary infrared source (13) in order to achieve full coincidence between the primary source (13) of the vehicle and the secondary pulses received from the vehicle ahead.

6. A system as claimed in any preceding claim, further comprising a source of accurate time signals and wherein the controller in the absence of detection of radiation from another vehicle is operative to synchronise the operation of the primary source (13) to the accurate time signals.

7. A system as claimed in claim 6, wherein the phase of the primary pulses is selected from one of only two possible phases in dependence upon the prevailing compass bearing of the vehicle.

8. A system as claimed in any preceding claim, wherein the communication link is further operative to exchange data with other vehicles to indicated at least one of the position, speed and deceleration of the vehicle to assist in avoiding collision between vehicles.

## Patentansprüche

1. Ein Nachtsicht-System für ein Motorfahrzeug, das umfaßt:
eine Primär-Infrarotquelle (13), um Primärpulse von Infrarotstrahlung auszustrahlen, um die vorausliegende Straße zu beleuchten;
eine Kamera (20), um von Gegenständen auf der Straße reflektierte Strahlung zu empfangen;
einen mit der Kamera (20) verbundenen Bildschirm (30), um ein Bild der Straße zu zeigen;
eine Kommunikationsverbindung (13, 20; 21, 19), um mit ähnlichen, in anderen Fahrzeugen eingebauten Nachtsicht-Systemen zu kommunizieren, um hinsichtlich der Zeiteinstellung jener von den Systemen ausgestrahlten Primärpulse den Austausch von Daten zwischen den Systemen zu befähigen; und
einen Regler (11), der an die Kommunikationsverbindung angeschlossen ist und arbeitet um die Phase der von der Primär-Infrarotquelle ausgestrahlten Pulsen in einer derartigen Art und Weise einzustellen, um Blendung des Nachtsicht-Systems von entgegenkommenden Fahrzeugen zu verhindern;
**gekennzeichnet durch**
einen Kompaß (40), um die Bewegungsrichtung des Fahrzeugs zu bestimmen; und worin der Regler (11) daran gehindert wird die Phase der Primär-Infrarotquelle in Reaktion auf Primär-Strahlungspulse zu verändern, wenn die Kompaßrichtung des Fahrzeugs innerhalb eines vorherbestimmten Bereichs liegt.

2. Ein Nachtsicht-System wie in Anspruch 1 beansprucht, in dem die Kommunikationsverbindung Vorrichtungen umfaßt um von einem entgegenkommenden, ähnlich ausgerüsteten Fahrzeug ausgestrahlte Pulse von Infrarotstrahlung zu Zeiten abzutasten, zu denen die Straße nicht von der Primärquelle (13) des Nachtsicht-Systems beleuchtet ist; und der Regler arbeitet um die Phase der Primärquelle (13) zu verändern, um ein Zusammenfallen von durch die Primärquelle ausgestrahlten Strahlungspulsen und den als von dem entgegenkommenden Fahrzeug abzutastenden Pulsen zu minimieren.

3. Ein System wie in Anspruch 2 beansprucht, in dem die Vorrichtung zu Abtastung von Pulsen infraroter Strahlung zu Zeiten, zu denen die Straße nicht von der Primär-Infrarotquelle beleuchtet ist, mit der Kamera (20) verbundene Verarbeitungsvorrichtungen umfaßt.

4. Ein System wie in Anspruch 2 beansprucht, in dem die Vorrichtung zur Abtastung von Pulsen infraroter Strahlung zu Zeiten, zu denen die Straße nicht von der Primär-Infrarotquelle beleuchtet ist, einen von der Kamera (20) getrennten Strahlungssensor umfaßt.

5. Ein System wie in einem der vorstehenden Ansprüche beansprucht, in dem die Kommunikationsverbindung umfaßt:
a) Sekundärquelle (21), um von der Rückseite des Fahrzeugs Sekundär-Strahlungspulse auszustrahlen, die physikalisch von jenen von der Primär-Infrarotquelle unterscheidbar sind; und
b) Vorrichtungen (19), um Sekundärstrahlung zu detektieren, die von einem ähnlich ausgerüsteten Fahrzeug ausgestrahlt wird dem gefolgt wird; und
in dem der Regler (11) in Reaktion auf die Abtastung von Sekundärstrahlung arbeitet, um die Phase der Primär-Infrarotquelle (13) zu verändern, um ein vollständiges Zusammenfallen zwischen der Primärquelle (13) des Fahrzeugs und des von dem vorausfahrenden Fahrzeug empfangenen Sekundärpuls zu erreichen.

6. Ein System wie in einem der vorstehenden Ansprüche beansprucht, das weiterhin eine Quelle akkurater Zeitsignale umfaßt, und in dem der Regler in Abwesenheit der Detektion von Strahlung von einem anderen Fahrzeug arbeitet, um den Betrieb der Primärquelle (13) auf die akkuraten Zeitsignale zu synchronisieren.

7. Ein System wie in Anspruch 6 beansprucht, in dem die Phase der Primärpulse abhängig von der vorherrschenden Kompaßrichtung des Fahrzeugs aus einer von nur zwei möglichen Phasen ausgewählt wird.

8. Ein System wie in einem der vorstehenden Ansprüche beansprucht, in dem die Kommunikationsverbindung weiterhin arbeitet um Daten mit anderen Fahrzeugen auszutauschen, um mindestens eines von Stellung, Geschwindigkeit und Verzögerung des Fahrzeugs anzuzeigen, um dabei zu helfen Zusammenstöße zwischen Fahrzeugen zu vermeiden.

## Revendications

1. Un système de vision nocturne pour un véhicule motorisé, comprenant :
une source d'infrarouge primaire (13) pour émettre des impulsions primaires de rayonnement infrarouge afin d'illuminer la trajectoire avant,
une caméra (20) pour recevoir un rayonnement réfléchi par des objets situés sur la trajectoire,
un écran (30) connecté avec la caméra (20) pour représenter une image de la trajectoire,
un lien de communication (13, 20 ; 21, 19) pour communiquer avec des systèmes de vision nocturne similaires montés sur d'autres véhicules afin de permettre l'échange de données entre les systèmes au sujet de la cadence des impulsions primaires émises par les systèmes, et
un contrôleur (11) connecté avec le lien de communication et opérationnel pour régler la phase des impulsions émises par la source d'infrarouge primaire (13) de manière à éviter l'éblouissement des systèmes de vision nocturne de véhicules circulant en sens inverse,
**caractérisé par**
un compas ou une boussole (40) pour déterminer la direction de déplacement du véhicule et dans lequel le contrôleur (11) est empêché de changer la phase de la source d'infrarouge primaire en réponse à des impulsions de rayonnement primaires lorsque le relèvement au compas ou à la boussole du véhicule se situe dans un intervalle prédéterminé.

2. Un système de vision nocturne selon la revendication 1, dans lequel le lien de communication comprend des moyens pour détecter des impulsions de rayonnement infrarouge émises par un véhicule pareillement équipé et circulant en sens inverse, lorsque la route n'est pas illuminée par la source primaire (13) du système de vision nocturne, et le contrôleur est opérationnel pour changer la phase de la source primaire (13) afin de minimiser la coïncidence entre les impulsions de rayonnement émises par la source primaire et les impulsions détectées comme ayant été émises par le véhicule circulant en sens inverse.

3. Un système selon la revendication 2, dans lequel les moyens pour détecter des impulsions de rayonnement infrarouge lorsque la route n'est pas illuminée par la source d'infrarouge primaire comprennent des moyens de traitement connectés avec la caméra (20).

4. Un système selon la revendication 2, dans lequel les moyens pour détecter des impulsions de rayonnement infrarouge lorsque la route n'est pas illuminée par la source d'infrarouge primaire comprennent un détecteur de rayonnement, qui est distinct de la caméra (20).

5. Un système selon l'une quelconque des revendications précédentes, dans lequel le lien de communication comprend :
a) une source secondaire (21) pour émettre des impulsions de rayonnement secondaires depuis l'arrière du véhicule, qui peuvent être physiquement distinguées vis-à-vis des impulsions de rayonnement émises par la source d'infrarouge primaire, et
b) des moyens (19) pour détecter un rayonnement secondaire émis par un véhicule pareillement équipé, qui est suivi,
dans lequel le contrôleur (11) est opérationnel, en réponse à la détection de rayonnement secondaire, pour changer la phase de la source d'infrarouge primaire (13) afin d'obtenir une pleine coïncidence entre la source primaire (13) du véhicule et les impulsions secondaires reçues du véhicule situé sur l'avant.

6. Un système selon l'une quelconque des revendications précédentes, comprenant en outre une source de signaux chronologiques précis et dans lequel le contrôleur est opérationnel pour synchroniser le fonctionnement de la source primaire (13) selon les signaux chronologiques précis en l'absence de la détection de rayonnement émis par un autre véhicule.

7. Un système selon la revendication 6, dans lequel la phase des impulsions primaires est sélectionnée comme l'une parmi seulement deux phases possibles, en fonction du relèvement au compas prévalant du véhicule.

8. Un système selon l'une quelconque des revendications précédentes, dans lequel le lien de communication est en outre opérationnel pour échanger des données avec d'autres véhicules, afin d'indiquer au moins l'une parmi la position, la vitesse et la décélération du véhicule, de manière à faciliter la prévention d'une collision entre les véhicules.
